# EUROPÄISCHE PATENTANMELDUNG

(11) **EP 4 721 559 A1**
(43) Veröffentlichungstag der Anmeldung: **08.04.2026**
(21) Anmeldenummer: 25204087.8
(22) Anmeldetag: 23.09.2025
(51) Int. Cl.: A01L 5/00, A01L 3/00, A01L 7/00

(54) **VERSCHNALLUNG FÜR EINEN HUFSCHUH**

(30) Priorität: 04.10.2024 DE 202024105722 U
(71) Anmelder: Gesk, Gisela, 48493 Wettringen (DE)
(72) Erfinder: Gesk, Gisela, 48493 Wettringen (DE)
(74) Vertreter: Fritz Patent- und Rechtsanwälte PartmbB

(57) **Zusammenfassung**

Die Erfindung betrifft eine Verschnallung (2) für einen Hufschuh (1) zur Befestigung des Hufschuhs an dem Huf eines Huftieres, zum Beispiel eines Pferdes oder Esels, wobei die Verschnallung (2)
- einen ersten Riemen (21),
- einen zweiten Riemen (22),
- einen Ring (26),
- und eine Lasche (27),
aufweist, und wobei
- der erste Riemen (21) mit einem ersten Ende an dem Ring (26) befestigt ist,
- der zweite Riemen (22) mit einem ersten Ende an dem Ring (26) befestigt ist,
- die Lasche (27) mit einem ersten Ende an dem Ring (26) befestigt ist,
- der erste Riemen (21) mit einem Bereich des ersten Riemens (21), der sich an ein zweites Ende des ersten Riemens (21) anschließt, an einer Vorderseite des Hufschuhs (1) befestigbar ist,
- der zweite Riemen (22) mit einem Bereich des zweiten Riemens (22), der sich an ein zweites Ende des zweiten Riemens (22) anschließt, an der Vorderseite des Hufschuhs befestigbar ist,
- die Lasche (27) mit einem zweiten Enden an einer Rückseite des Hufschuhs (1) befestigbar ist.

## Beschreibung

Die vorliegende Erfindung betrifft eine Verschnallung für einen Hufschuh zur Befestigung des Hufschuhs an dem Huf eines Huftieres, zum Beispiel eines Pferdes oder Esels.

Hufschuhe sind als Mittel zum Schützen des Hufes von Huftieren seit langem bekannt. In den letzten Jahren haben Hufschuhe als Alternative zum Beschlag mit Hufeisen zunehmend mehr Verbreitung gefunden.

Hufschuhe werden meist mittels einer sogenannten Verschnallung an dem Huf des Huftieres befestigt. Diese umfassen Riemen, die an dem Hufschuh befestigt sind und um einen Teil des Hufes des Tieres gelegt werden. Schnallen oder andere Spannelemente dienen einem festen Sitz des Hufschuhs an dem Huf des Tieres.

Zugleich soll die Verschnallung das Tier nicht oder möglichst nicht beeinträchtigen. Die Verschnallung soll weder drücken noch scheuern und dem Tier auch keine Schmerzen oder Verletzungen zufügen.

Außerdem soll die Verschnallung einfach sein, so dass jeder Nutzer, der die Hufschuhe anlegen möchte, möglichst ohne besondere Schulung versteht, wie der Hufschuh angelegt wird.

Hier setzt die vorliegende Erfindung an.

Der vorliegenden Erfindung lag die Aufgabe zugrunde, eine Verschnallung für einen Hufschuh und eine Anordnung aus einem Hufschuh und der Verschnallung vorzuschlagen, die einfach handhabbar ist und das, Huftier nicht oder möglichst wenig beeinträchtigt.

Die Aufgabe wird mit einer Verschnallung nach Anspruch 1 und einer Anordnung aus einem Hufschuh und der Verschnallung nach Anspruch 8 gelöst. Ausgestaltungen der erfindungsgemäßen Verschnallung und der erfindungsgemäßen Anordnung sind in den Ansprüchen 2 bis 7 bzw. im Anspruch 9 angegeben.

Die erfindungsgemäße Verschnallung weist demnach
a. einen ersten Riemen
b. einen zweiten Riemen
c. einen Ring
d. und eine Lasche
   auf, wobei
e. der erste Riemen mit einem ersten Ende an dem Ring befestigt ist,
f. der zweite Riemen mit einem ersten Ende an dem Ring befestigt ist,
g. die Lasche mit einem ersten Ende an dem Ring befestigt ist,
h. der erste Riemen mit einem Bereich des ersten Riemens, der sich an ein zweites Ende des ersten Riemens anschließt, an einer Vorderseite des Hufschuhs befestigt werden kann,
i. der zweite Riemen mit einem Bereich des zweiten Riemens, der sich an ein zweites Ende des zweiten Riemens anschließt, an der Vorderseite des Hufschuhs befestigt werden kann,
j. die Lasche mit einem zweiten Ende an einer Rückseite des Hufschuhs befestigt werden kann.

Die Laschen kann durch einen Riemen, zum Beispiel aus einem Textil, Leder, Kunststoff oder dergleichen oder durch Bauteil aus Metall gebildet sein.

Der Ring einer erfindungsgemäßen Verschnallung kann ein D-Ring oder ein Dreiecksring sein. Der gerade Abschnitt eines D-Rings oder die geraden Abschnitte eines Dreiecksrings sind in besonderer Weise für die Befestigung eines Riemens geeignet. Das Ende des Riemens kann als Schlaufe um diese geraden Abschnitte gelegt werden. Außerdem ist es durch den oder die geraden Abschnitte eines Rings einfacher, die Schlaufen, die zur Befestigung des Riemens an dem Ende des Riemens ausgebildet sein können, in einer gewünschten Position zu halten.

Der erste und/oder zweite Riemen und/oder die Lasche ist/sind mit Neopren überzogen. Durch den Neopren-Überzug kann eine Polsterung geschaffen werden, die Einschnürung und Scheuerstellen verhindern. Vorzugsweise bildet das Neopren einen Schlauch, der über den Riemen gezogen ist. In einem solche Neopren-Schlauch kann sich der Riemen, über den der Neopren-Schlauch gezogen ist, frei bewegen, ohne dass dazu der Neopren-Schlauch gegenüber dem Huf bewegt werden muss. Insbesondere dadurch wird ein Scheuern der Verschnallung an dem Huf des Tieres verhindert.

Der Neopren-Schlauch kann aus einem rechteckigen Stück Neopren durch Nähen oder Nähen und Kleben hergestellt sein. Ist das Neopren an der Naht auch verklebt, kann der Schlauch durch Abschneiden gekürzt werden, ohne dass der Faden der Naht anschließend wieder vernäht werden müsste, um ein Auflösen der Naht zu verhindern.

Erfindungsgemäß kann das Neopren sich über die ganze Länge des Riemens erstrecken. Vorzugsweise kann das Neopren an dem ersten und/oder zweiten Riemen zwischen einem ersten Ende und einem mittleren Bereich zwischen dem ersten und dem zweiten Ende des Riemens vorgesehen sein. Ein Bereich des ersten und/oder zweiten Riemens bleibt dann frei von Neopren. Dieser Bereich kann dann zur Einstellung der Länge des ersten und/oder zweiten Riemens genutzt werden. Das Neopren kann auf den Riemen frei verschiebbar sein.

Der erste Riemen und/oder der zweite Riemen können Löcher aufweisen, die zur Befestigung des Riemens am Hufschuh vorgesehen sind. Diese Löcher können sich in einem Bereich des ersten und/oder zweiten Riemens befinden, der nicht von dem Neopren abgedeckt ist. Mit Hilfe der Löcher können der erste Riemen und/oder der zweite Riemen an Befestigungselementen, die am Hufschuh vorgesehen sind, lösbar befestigt werden. Die Befestigungselemente können dazu in die Löcher eingeführt werden.

Die Löcher können ähnlich wie bei einem Gürtel in einer Reihe zwischen dem zweiten Ende und dem mittleren Bereich des ersten und des zweiten Riemens angeordnet sein.

Eine erfindungsgemäße Anordnung aus einem Hufschuh und einer Verschnallung, bei der der Hufschuh
a. eine Sohle zum Abdecken einer Hufsohle des Hufes eines Huftieres und
b. einen Oberschuh zum Abdecken einer Hufwand des Hufes
aufweist, die Verschnallung erfindungsgemäß ausgebildet ist und an dem Oberschuh erste Befestigungselemente angebracht sind, über die an die die zweiten Enden des ersten bzw. des zweiten Riemens anschließenden Bereiche des ersten bzw. des zweiten Riemens lösbar mit dem Hufschuh verbunden sind. Vorzugweise sind die Stellen, an denen die Befestigungselemente an dem Oberschuh befestigt sind, so gewählt, dass der erste Riemen und der zweite Riemen sich auf der Vorderseite des Hufschuhs kreuzen. Dadurch wird ein guter Halt des Hufschuhs an dem Huf des Tieres erreicht.

Die Merkmale und Vorteile eines Ausführungsbeispiels der Erfindung werden unter Bezugnahme auf die Zeichnungen nachfolgend beschrieben. Es zeigt:
- Fig. 1: eine Ansicht einer Vorderseite einer erfindungsgemäßen ' Anordnung aus einem Hufschuh und einer Verschnallung zur Befestigung des Hufschuhs an einem Huf eines Tieres,
- Fig. 2: eine Ansicht einer Rückseite der Anordnung,
- Fig. 3: eine Ansicht auf eine Oberseite der flach ausgelegten nicht mit einem Hufschuh verbundenen Verschnallung aus der Anordnung nach Fig. 1 und 2 und
- Fig. 4: eine Ansicht auf eine Unterseite der Verschnallung aus Fig. 3.

Es ist nicht notwendig, dass eine erfindungsgemäße Verschnallung oder Anordnung alle nachfolgend beschriebenen Merkmale aufweist. Es ist auch möglich, dass eine erfindungsgemäße Anordnung nur einzelne Merkmale des nachfolgend beschriebenen Ausführungsbeispiels aufweist.

Die dargestellte erfindungsgemäße Verschnallung 2 weist einen ersten Riemen 21, einen zweiten Riemen 22 und eine Lasche 27 auf.

An ersten Enden dieser Riemen 21, 22 sind Schlaufen gebildet, die um je einen Abschnitt eines Rings 26 gelegt sind. Dazu ist der Riemen um ca. 180° umgelegt und schließt dabei den Abschnitt des Rings 26 ein. Der umgelegte Teil des Riemens ist an dem nicht umgelegten Teil des Riemens 21, 22 angelegt und befestigt. Diese Befestigung kann lösbar sein. Die Riemen können so gestaltet sein, dass der umgelegte Teil der Riemen und der nicht umgelegte Teil der Riemen in verschiedenen Positionen zueinander befestigt werden können. Damit ist es zum Beispiel möglich, die Länge der Riemen einzustellen.

Ein erstes Ende der Lasche 27 ist ebenfalls mit dem Ring 26 verbunden. Die Lasche 27 kann dazu an dem ersten Ende eingerollt sein. Die Einrollung kann den Ring 26 umschließen.

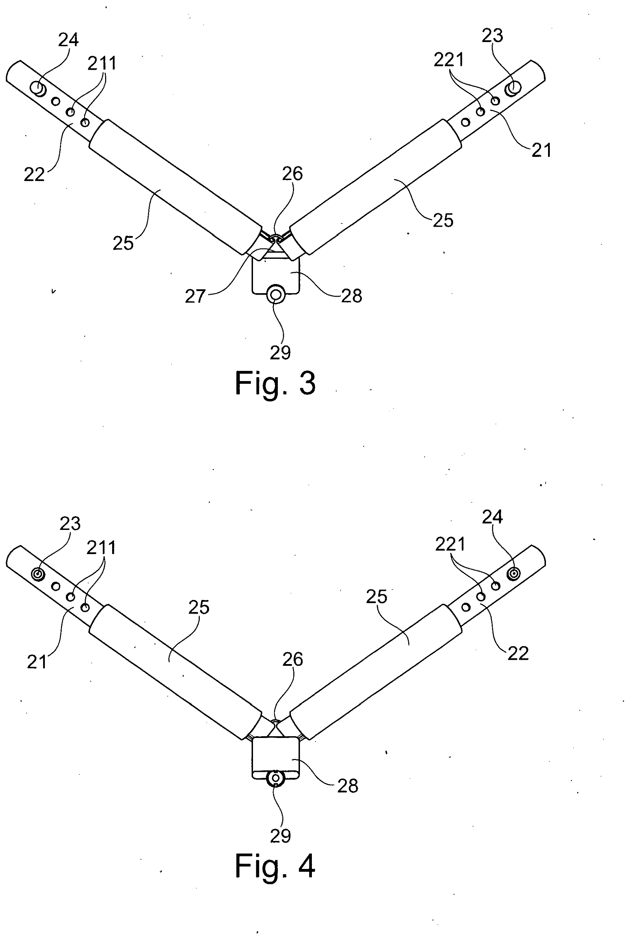

Der erste Riemen 21 und der zweite Riemen 22 sind identisch. Sie weisen in einem Bereich, der sich ungefähr von der Mitte des Riemens 21, 22 zum zweiten, nicht mit dem Dreiecksring 26 verbundenen Ende erstreckt, ein Lochbild aus in einer Reihe angeordneten Löchern 211, 221 auf. Diese Löcher 211, 221 sind in gleichem Abstand zueinander angeordnet und dienen einer lösbaren Befestigung der Riemen an der Vorderseite eines Hufschuhs 1, nämlich an der Vorderseite des Oberschuhs des Hufschuhs, der in den Figuren gestrichelt dargestellt ist. Zur Befestigung sind an der Vorderseite des Oberschuhs zwei Befestigungselemente 23, 24 vorgesehen, von denen je eins in eines der Löcher 211, 221 eines der beiden Riemen 21, 22 eingesteckt ist. In den Figuren 3 und 4 sind diese Befestigungselemente 23, 24 gelöst vom Hufschuh und in eines der Löcher 211, 221 eingesteckt dargestellt.

Die Befestigungselemente 23, 24 sind so am Hufschuh angeordnet und der erste Riemen 21 und der zweite Riemen 22 sind so geführt und mit den Befestigungselementen 23, 24 verbunden, dass die beiden Riemen 21, 22 auf der Vorderseite des Hufschuhs einander kreuzen.

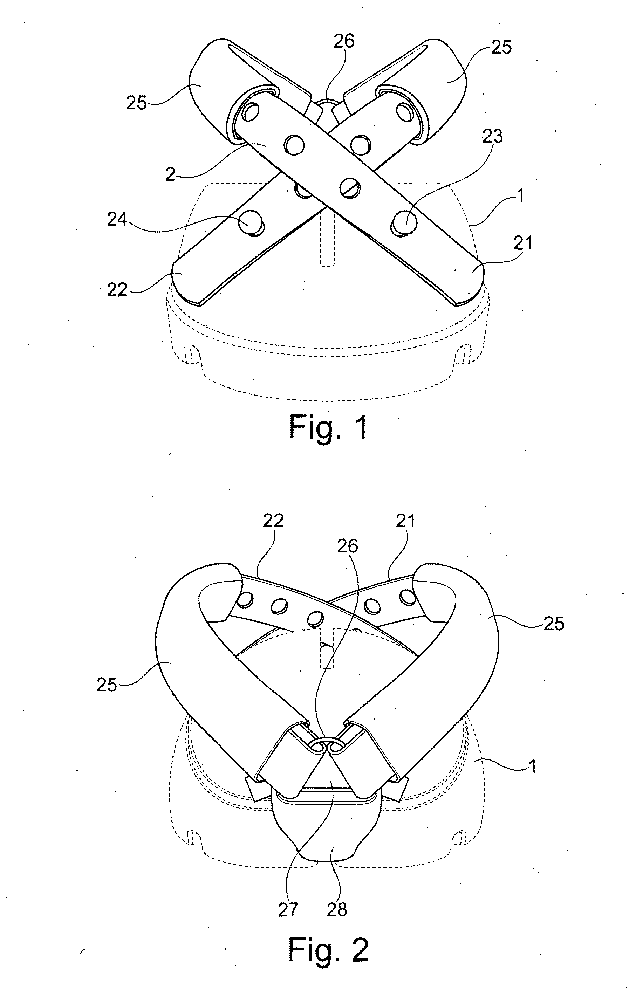

Die Lasche 27, der in den Figuren 1 bis 4 nicht oder nahezu nicht erkennbar ist, ist nur sehr kurz. Er dient der Befestigung der Verschnallung auf der Rückseite des Hufschuhs und ist dazu mit einem Befestigungselement 29 mit dem Oberschuh des Hufschuhs fest verbunden.

Sowohl der erste Riemen 21 als auch der zweite Riemen 22 sind mit einem zu einem Schlauch vernähten und verklebt Neopren 25 überzogen. Diese decken insbesondere den Bereich des ersten und zweiten Riemens 21, 22 ab, der sich an das erste Ende bzw. den Dreiecksring 26 anschließt. Der Schlauch erstreckt sich ungefähr über 2/3 der Länge des ersten bzw. zweiten Riemens.

Auch die Lasche 27 ist mit einem Schlauch vernähten Neopren 28 überzogen. Dieser Schlauch erstreckt sich über die gesamte Länge Lasche 27, weshalb die Lasche in den Figuren nahezu nicht erkennbar ist.

Zum Anlegen des Hufschuhs 1 an einen Huf des Tieres wird der Huf des Tieres in den Hufschuh 1 eingeführt. Dann werden der erste und der zweite Riemen 21, 22 von der Rückseite des Hufschuhs 1 auf je einer Seite um den Huf zur Vorderseite des Hufschuhs 1 herumgeführt und auf der Vorderseite gekreuzt. Dann werden die Riemen 21, 22 angezogen und mit den auf der Höhe der Befestigungselemente 23, 24 liegenden Löchern 211, 221 an diesen Befestigungselementen 23, 24 befestigt. Das Spannen von Schnallen oder dergleichen ist nicht notwendig. Sobald der Huf nach dem Einführen in den Hufschuh einen festen Sitz im Hufschuh hat, können die Riemen 21, 22.befestigt werden. Dieses Anlegen ist für einen Benutzer intuitiv machbar. Einer besonderen Anleitung bedarf es dafür im Grunde nicht.

## Patentansprüche

1. Verschnallung (2) für einen Hufschuh (1) zur Befestigung des Hufschuhs an dem Huf eines Huftieres, zum Beispiel eines Pferdes oder Esels, wobei die Verschnallung (2)
- einen ersten Riemen (21),
- einen zweiten Riemen (22),
- einen Ring (26),
- und eine Lasche (27),
aufweist, und wobei
- der erste Riemen (21) mit einem ersten Ende an dem Ring (26) befestigt ist,
- der zweite Riemen (22) mit einem ersten Ende an dem Ring (26) befestigt ist,
- die Lasche (27) mit einem ersten Ende an dem Ring (26) befestigt ist,
- der erste Riemen (21) mit einem Bereich des ersten Riemens (21), der sich an ein zweites Ende des ersten Riemens (21) anschließt, an einer Vorderseite des Hufschuhs (1) befestigbar ist,
- der zweite Riemen (22) mit einem Bereich des zweiten Riemens (22), der sich an ein zweites Ende des zweiten Riemens (22) anschließt, an der Vorderseite des Hufschuhs befestigbar ist,
- die Lasche (27) mit einem zweiten Enden an einer Rückseite des Hufschuhs (1) befestigbar ist.

2. Verschnallung (2) nach Anspruch 1, **dadurch gekennzeichnet, dass** der Ring (26) ein D-Ring oder ein Dreiecksring ist.

3. Verschnallung (2) nach Anspruch 1 oder 2, **dadurch gekennzeichnet, dass** der erste und/oder zweite Riemen 21, 22) und/oder Lasche (27) mit Neopren (25, 28) überzogen ist.

4. Verschnallung (2) nach Anspruch 3, **dadurch gekennzeichnet, dass** das Neopren (25, 28) einen Schlauch bildet, der über den ersten und/zweiten Riemen (21, 22, 27) gezogen ist.

5. Verschnallung (2) nach Anspruch 3 oder 4, **dadurch gekennzeichnet, dass** das Neopren (25, 28) an dem ersten und/oder zweiten Riemen (21, 22) zwischen einem ersten Ende und einem mittleren Bereich des ersten und des zweiten Riemens (21, 22) vorgesehen ist.

6. Verschnallung (2) nach einem der Ansprüche 1 bis 5, **dadurch gekennzeichnet, dass** der erste Riemen (21) und/oder der zweite Riemen (22) Löcher (211, 221) aufweist, die zur Befestigung des ersten bzw. zweiten Riemens (21, 22) am Hufschuh (1) vorgesehen sind.

7. Verschnallung (2) nach Anspruch 6, **dadurch gekennzeichnet, dass** die Löcher (211, 221) in einer Reihe zwischen dem zweiten Ende und dem mittleren Bereich des ersten bzw. zweiten Riemens (21, 22) angeordnet sind.

8. Anordnung aus einem Hufschuh (1) und einer Verschnallung (2), wobei der Hufschuh (1)
- einer Sohle zum Abdecken einer Hufsohle des Hufes eines Huftieres und
- einen Oberschuh zum Abdecken einer Hufwand des Hufes aufweist,
**dadurch gekennzeichnet, dass** die Verschnallung (2)
- nach einem der Ansprüche 1 bis 7 ausgebildet ist
- und an dem Oberschuh erste Befestigungselemente (23, 24) angebracht sind, über die die an die zweiten Enden des ersten bzw. des zweiten Riemens (21, 22) anschließenden Bereiche des ersten bzw. des zweiten Riemens lösbar mit dem Hufschuh (1) verbunden sind.

9. Anordnung nach Anspruch 8, **dadurch gekennzeichnet, dass** der erste Riemen (21) und der zweite Riemen (22) sich auf der Vorderseite des Hufschuhs (1) kreuzen.
